Europäisches Patentamt

(19) European Patent Office

Office européen des brevets

(11) Publication number : 0 462 945 A1

## (12) EUROPEAN PATENT APPLICATION

(21) Application number : 91830266.2

(51) Int. Cl.⁵ : G01C 15/00

(22) Date of filing : 17.06.91

(30) Priority : 18.06.90 IT 942990

(43) Date of publication of application :
27.12.91 Bulletin 91/52

(84) Designated Contracting States :
DE FR GB

(71) Applicant : A.C.M.E. PROGETTI DI FAGGI
VALERIO
30 Via 2 Giugno
I-50019 Sesto Fiorentino (Florence) (IT)

(72) Inventor : Faggi, Valerio
30, Via 2 giugno
Sesto Fiorentino, Florence (IT)
Inventor : Bettarini, Andrea
23, Case Sparse, S. Polo
Greve in Chianti, Florence (IT)

(74) Representative : Bardini, Marco Luigi et al
c/o Società Italiana Brevetti S.p.A. Corso dei
Tintori, 25
I-50122 Firenze (IT)

(54) Device for the spatial detection of objects or shapes, in particular for agronomical researches.

(57) A device for the spatial survey of objects and shapes, in particular for agronomical researches, comprising an instrumental part substantially shaped as a pistol (1) containing a compass for the detection of azimuth, a first inclinometer (5) for the measurement of the angles of elevation, and a second inclinometer (6) for the measurement of the angles of inclination or rotation with respect to a horizon of reference. The instrumental part is equipped with an interface unit (104) for the connection to a unit of calculation and data recording for further processing.

Fig.1

## DESCRIPTION

The present invention relates to a device for the spatial survey of objects or shapes, in particular, but not exclusively, for agronomical researches.

In many fields it is often necessary to know spatial survey data for objects and shapes starting from a point of survey, in which the data comprise a reading with respect to the magnetic North, the angle of elevation (positive or negative), and the angle of inclination with respect to a reference horizon.

Until now such readings were taken with complex equipment of high precision such as tachometers, tellurometers, compasses, etc. forming a group of separate instruments with normal readings subject to error and requiring a great waste of time in that the operator had to keep under control three groups of data furnished by different pieces of equipment and usually record the data readings in order to process at a later time the data obtained for the predetermined objects of the particular research job.

The object of the present invention is to provide an integrated device capable of acquiring the three parameters of interest mentioned above, which can be associated with an electronic data logger in order to obtain an immediate recording of the data of the detection for possible subsequent processing.

The present invention provides for an instrumental part substantially shaped as a pistol containing a compass for the detection of azimuth, a first inclinometer for the measurement of the angle and a second inclinometer for the measurement of the angle of inclination or rotation with respect to the reference horizon; said instrumental part being provided with a computing unit and data recording unit for a subsequent processing.

The present invention will now be described with reference to one of its presently preferred embodiments, given as an example but not limitative, and based on the attached drawings, in which:

- figure 1 shows a schematic view in longitudinal section of the survey device according to the present invention;
- figures 2 and 3 show views in section on planes II-II and III-III of the cardanic suspension of the azimuth sensor (static compass) housed in the device of figure 1;
- figures 4a, 4b and 4c show schematic views of one of the inclinometers housed in the device of figure 1;
- figure 5 shows a block diagram of the circuitry associated with the inclinometers used in the device according to the invention;
- figure 6 shows the relationships between angles of elevation and signal voltage illustrativs of the functioning of the circuitry of figure 5;
- figure 7 shows a block diagram of the electronic system of the device for spatial detection according to this invention.

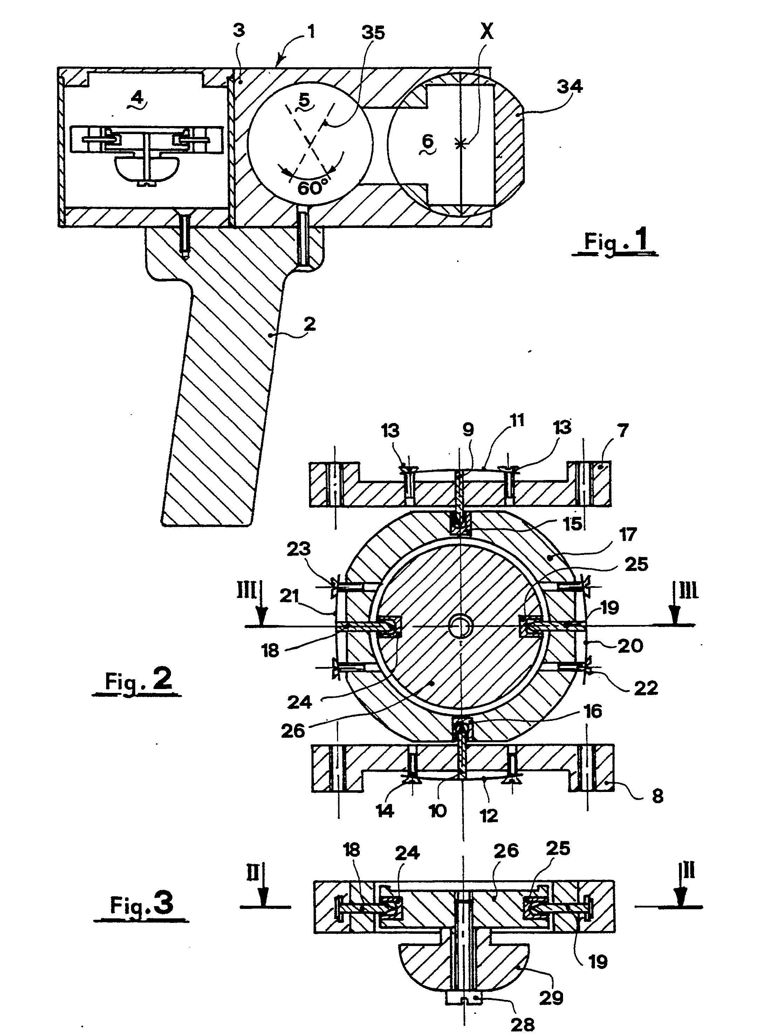

With reference to the drawings, and in particular to figure 1, the survey device comprises a survey unit housed in a structure shaped substantially as a pistol, generally indicated at 1, equipped with a handle 2 and a body 3, comprising housings 4, 5 and 6, as will be seen, for housing respectively the azimuth sensor (compass) and the elevation and rotation sensors.

In the upper part of the body 3, a sight or, in case of the need for measurements of high precision, an optical collimator can be mounted. These components are not illustrated in detail in that they are well known by experts in the field.

In the housing 4 there is mounted the azimuth sensor formed by a static compass such as "fluxgate" compass, or preferably a static compass of the type produced by Autohelm (U.K.), capable, with the proper electronics, of providing an electric signal corresponding to the orientation of the detection device with respect to the magnetic North.

In order for the azimuth sensor to provide correct indications, it is necessary that the sensor be maintained horizontal regardless of the spatial orientation of the body 1 of detection.

For that purpose a cardanic suspension with a pendular mass, as illustrated in figures 2 and 3, has been provided for. As can be noted in these figures, the cardanic suspension comprises a couple of supports 7, 8 fixed on the inside of housing 4 which support a couple of pivots with conical points indicated in 9,10 slidably mounted with a negligible slack in supports 7, 8. Springs 11, 12 respectively maintained in a biasing position, are held in place with screws 13, 14. The pivots 9, 10 are pushed against conical seats 15, 16 mounted in the first mobile retainer 17 of the cardanic suspensions. The retainer 17 is also equipped with pivots with conical points 18, 19 pressed by springs 20, 21 held in place by screws 22, 23.

The pivots 18, 19 cooperate, as in the previous case, with conical seats 24, 25 mounted in the second mobile retainer 26 destined to support the active element of the azimuth sensor (compass).

In the lower part of the internal retainer 26, a pendular mass 29 is mounted by means of a screw 28, and is conveniently placed symmetrically with respect to the sensor (not shown) mounted on the retainer 26 such that it always remains horizontal regardless of the orientation of the body 1 of the detection device.

It is important to note at this point that the construction materials will be chosen from among non-magnetic metallic materials and/or structural plastic materials, and furthermore care must be taken to avoid that connection wires of the detection device 1 to the collection and detection data computation exchange are carry DC currents capable of producing static-magnetic fields which can introduce errors into the functioning of the azimuth sensor (compass).

It must also be noted that the angles of aperture of the cones of the pivots mentioned above and those of the relative seats must be chosen such as to reduce the friction to a minimum, especially the sticking friction in order to reduce as much as possible the planar error of the mobile retainer 26 even in the presence of small variations in the angle of elevation and rotation of the survey device.

Now, the rotation and elevation sensors, which, as said above, are housed in housings 5 and 6 of the device 1 will be described (figure 1).

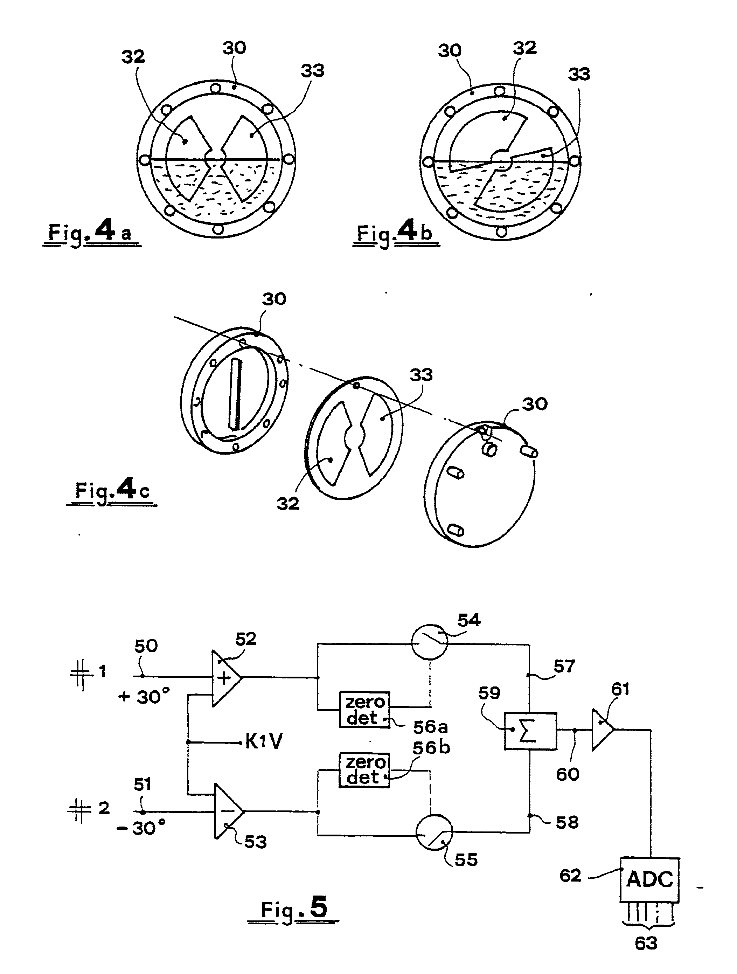

In the preferred embodiment the rotation and elevation sensors are inclinometers with liquid pendulums as shown in figures 4a and 4b, formed by a shell 30, in which a dielectric liquid 31 and a couple of butterfly-shaped capacitor plates 32, 33 are contained.

With the varying of the position of the sensor on an axis perpendicular to the plane of the drawing, the immersion ratio of the capacitor plates 32, 33 changes and consequently their electric capacity.

In this way with interface electronics, a DC electrical signal can be obtained linearly variable with the angle of inclination of the sensor. Sensors of this type are manufactured by Sperry (U.K.) under the name Accustar, and can measure angles of ±60° with respect to the zero position shown in figure 4a. Since the above mentioned components are commercial components, further details of their functioning will not be entered into.

As regards the rotation sensor, housed in the housing 6 in the rear part of the body 1, in case of rotation measurements in the presence of angles of elevation equal to ± 60° the arrangement indicated in figure 1 is sufficient. In order to detect angles of rotation when elevation measurements with angles greater than ± 60° are effected, the possibility of rotating the support 34 of the sensor to a certain angle with respect to the body 1 is provided for by means of rotation on an axis X perpendicular to the plane of the drawing. Said angle can be determined by means of a scale, not shown, formed on the body 1 or on the element 34.

With regard to the elevation sensor, it is necessary to note that, while rotations of ± 60° are normally more than sufficient, the necessity is foreseen of executing measurements of elevation frequently of ± 90°, that is exceeding the measurement range for the liquid pendulum sensors mentioned above which is limited to ± 60° = 120°.

In order to overcome this incovenience in the measurement of the angles of elevation, in housing 5 (figure 1) a couple of inclination sensors is installed with a zero or of reference angle staggered to an angle equal to 60° as indicated in 35 in figure 1. In this way, with a simple circuitry, by using two sensors staggered in the same way it is possible to make a measurement of ± 90° even if the individual sensors have an interval of measurement of ± 60°.

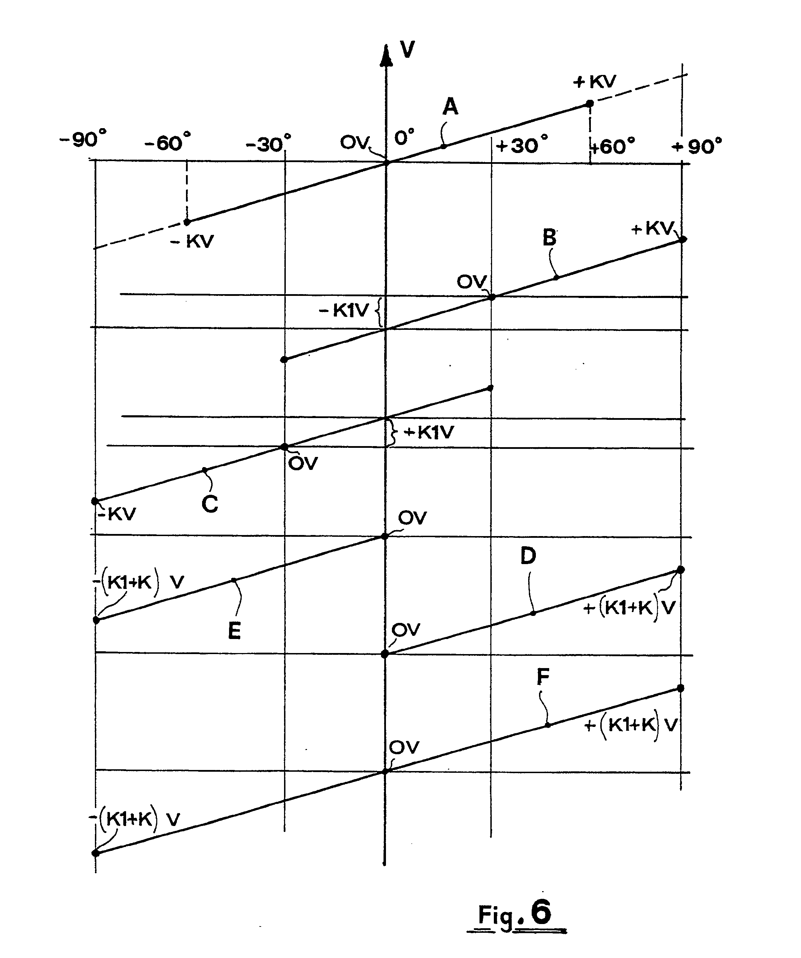

In order to better comprehend the technology used, reference is made to the diagrams of figure 6 where the sensors DC voltage outputs are indicated on the Y-coordinate, and the angles of elevation on the X-coordinate.

As can be noted in figure 6, line A indicates the response of an inclinometer of the type used in the detector in question when its axis of symmetry coincides with the vertical. When the angle of inclination of the axis of symmetry is equal to zero, an output of zero volts will result, and when there is an inclination of ± 60,° an output voltage equal to + KV where K is an instrumental constant, results. Similarly, for an inclination of - 60°, an output equal to - KV, where K is the same instrumental constant, results.

For angles of inclination greater than ± 60° the output of the inclinometers is no longer significant (out of scale situation).

In order to be able to measure angles of elevation up to ± 90°, that is, beyond the range of a single inclinometer, as previously mentioned, a couple of inclinometers are used staggered with one another by 60°, that is, a first inclinometer mounted at +30° with respect to the vertical, and a second inclinometer mounted at -30° with respect to the vertical.

The response of the inclinometers inclined by +30° and -30° is indicated respectively by lines B, C of figure 6. It can be noted that for one inclinometer a null output will be obtained for an angle of +30°, an output equal to +KV for an angle of +90°, and an output of K1V for an angle of 0° (line B).

For an inclinometer mounted at -30° (line C), a null output will be obtained for angle of -30°, an output equal to -KV for an angle of -90°, and an output equal to K1V for an angle of 0°.

Adding to the output of the inclinometer inclined by +30° a fixed voltage equal to K1V (line D), a linear response between 0° and 90° is obtained which varies between a null voltage and a maximum voltage +(K1 + K)V in correspondance with 90°. With the same procedure, subtracting from the inclinometer inclined by -30° a fixed voltage equal to - K1V (line E) a linear response between 0° and -90° is obtained. (In lines D, E the negative voltages for the line D and the positive ones for the line E are obviously eliminated).

Summing the voltages represented by lines D, E in an adder, the resulting response of the two inclinometers is obtained, said response being a function which varies with continuity between -(K1 + K)V and + (K1 + K)V, when the angles of elevation vary from -90° to +90°, reaching the desired result of a range of elevation measurement equal to 180°.

Numerous types of circuits for the practical realization of the processing of the signals illustrated in figure 6 are conceivable.

One possible embodiment is shown in the block diagram of figure 5.

As can be noted in this figure, the outputs of the sensors # 1 and # 2, respectively staggered by +30° and -30° with respect to the vertical, are applied to lines 50, 51 to the summing amplifier 52 and to the subtracting amplifier 53. To the auxiliary inlet respectively of summation and difference of the amplifiers 52, 53 the reference voltage K1V (figure 5) is applied.

The outputs of the amplifiers 52, 53 are respectively applied to respective above zero detectors 56a, 56b which command switches 54, 55. The outputs 57, 58 of the switches 54, 55 are combined in a combiner circuit 59, the output 60 of which pilots a buffer amplifier 61 connected to a digital analog converter 62 which provides in 63 a digital output representing the various inclinations between -90° and +90° of the detector.

The digital analog converter 63 will have a resolution in terms of number of output bits higher than or equal to the resolution in degrees provided for the detector in question.

The scheme in figure 5 is shown only as an example of one of the many solutions which can be utilized. For example, a digital analog converter equivalent to the converter 62 could have its own analog output connected alternatively to the lines 50, 51, and operations equivalent to the addition and the subtraction of the constant K1V mentioned above could be carried out via software with well-known technics by means of a single processor or equivalent means of hard-wired logic or rather with a "look-up" table loaded in a ROM.

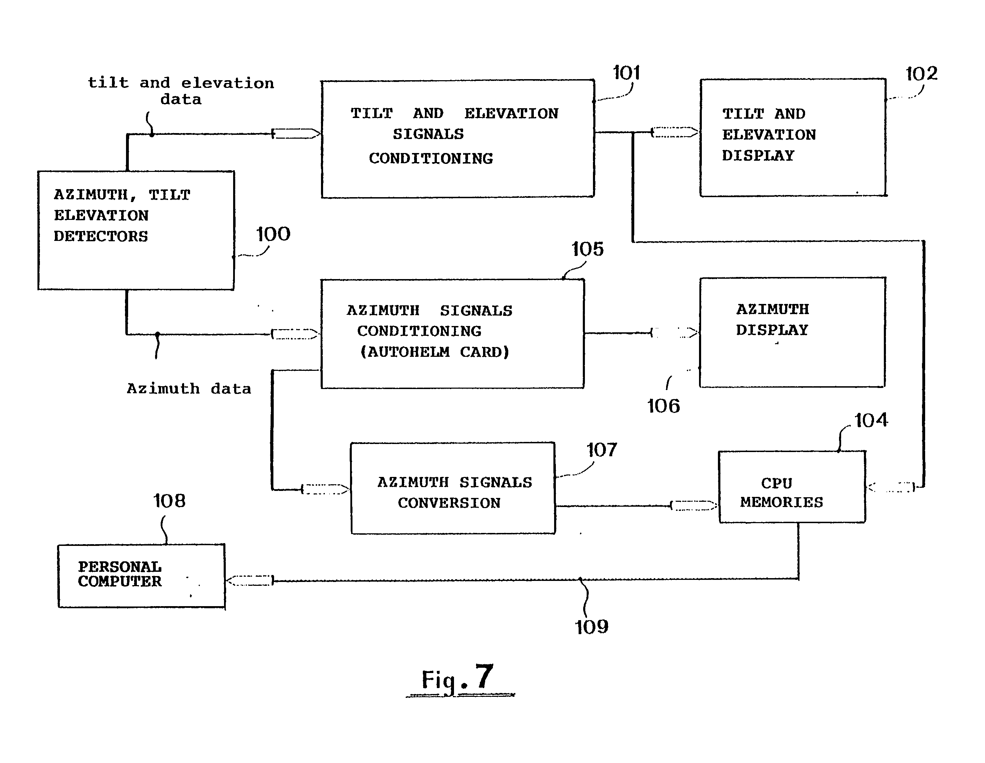

With reference to figure 7, the logic block diagram of the electronic system associated with the detector according to the invention will now be illustrated. The group 100 comprising the rotation, elevation and azimuth sensors is associated with a group 101 for the conditioning of elevation and rotation signals which is connected to a display 102 of elevation and rotation data, and to a CPU with memories indicated by the block 104.

The data on azimuth coming from the block 100, are applied to a unit of conditioning of the signals of azimuth indicated in 105 (Autohelm card) which drives a display of azimuth 106. The unit 105 provides also information to a unit 107 of conversion of the azimuth signals, the output of which is sent to the unit 104, previously mentioned.

The unit 104 can be associated with a personal computer 108 by means of a connection line 109 of a machine dialogue according to any protocol of communication, for example a serial line RS232.

It must be noted that what is shown in figure 7 may not correspond to single blocks of circuit units of processing, but can be part of a conventional microprocessor unit equipped with relative peripherals and furnished with an appropriate software, as will be clear to an expert in the field.

Auxiliary elements such as the commands which begin reading, initialization, etc. have not been mentioned in that they are obvious.

Variations and/or modifications can be brought to the device for spatial survey according to this invention, without departing from the scope of the invention itself.

## Claims

1. Device for the spatial survey of objects or shapes, in particular for agronomical researches, characterized it comprises an instrumental part substantially in the form of a pistol containing a compass for the detection of azimuth, a first inclinometer for the measurement of angles of elevation and a second inclinometer for the measurement of angles of inclination or rotation with respect to a horizon of reference; said instrumental part being equipped with an interface unit for the connection to a unit of calculation and data recording for further processing.

2. Device according to claim 1, characterized in that said detecting compass for azimuth comprises a sensor for the orientation of said instrumental part with respect to the magnetic North, said sensor being of a solid state type of a "fluxgate" or equivalent kind.

3. Device according to claim 2, characterized by the fact that said sensor of the magnetic North is mounted on a platform of cardanic suspension associated with a pendulum mass arranged in such a way that said sensor is sensible to the single horizontal component of the terrestrial magnetic field.

4. Device according to 1 or more of the previous claims, characterized in that said inclinometers are of a liquid pendulum type and with a capacity type detection of the inclination with respect to the vertical of a capacitive type.

5. Device according to claim 4, characterized in that said inclinometer for the measurement of angles of inclination or rotation with respect to a horizon of reference is mounted on said instrumental part on a pivotable ring for the purpose of maintaining its correct positioning with the variation of the angle of elevation.

6. Device according to claim 4, characterized in that said inclinometer sensors for the measurement of angles of elevation comprises a couple of sensors singularly staggered by a positive and negative angle with respect to the vertical for the purpose of measuring inclusive angles of elevation greater than the maximum angle of elevation measurable with a single inclinometer.

7. Device according to claim 4, characterized in that said staggered angles are + 30° with respect to the vertical.

8. Device according to claims 6 or 7, characterized in that it comprises means for the processing of signals coming from said angularly staggered inclinometers arranged in order to combine the individual outputs of said staggered inclinometers, for the purpose of providing an output signal corresponding to a total admissable angle of measurement larger than that of the single inclinometer.

9. Device according to claim 8, characterized in that said processing means comprises a disposition for, respectively, subtracting and summing at the output of the single inclinometers a fixed value proportional in absolute value to the staggered semi-angle of said inclinometers.

10. Device according to one or more of the previous claims, characterized in that it is associated with a peripheral micro-processor unit suitable to communicating with a host calculator.

Fig.1

Fig.2

Fig.3

Fig.**4** a

Fig.**4** b

Fig.**4** c

Fig.**5**

Fig. 6

tilt and elevation data

AZIMUTH, TILT ELEVATION DETECTORS  100

TILT AND ELEVATION SIGNALS CONDITIONING  101

TILT AND ELEVATION DISPLAY  102

Azimuth data

AZIMUTH SIGNALS CONDITIONING (AUTOHELM CARD)  105

AZIMUTH DISPLAY  106

AZIMUTH SIGNALS CONVERSION  107

CPU MEMORIES  104

PERSONAL COMPUTER  108

109

Fig.7

EP 0 462 945 A1

**European Patent Office**

## EUROPEAN SEARCH REPORT

Application Number

EP 91 83 0266

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 837 717  (WIKLUND) <br> * Figures 1,2; column 2, lines 13-58; column 4, line 63 - column 5, line 12 * | 1,2 | G 01 C  15/00 |
| Y | | 3 | |
| Y | US-A-2 879 415  (WENDT) <br> * Figures 1,3; column 3, lines 3-27 * | 3 | |
| A | FR-A-2 582 389  (LANCHIER) <br> * Figure 1; abstract * | 1 | |
| A | GB-A-1 536 076  (COLLIS) <br> * Figures 1,4; claims 1,2 * | 1 | |
| A | GB-A-1 443 695  (COLLIS) <br> * Figures 1,4; claims 1,2 * | 1 | |
| A | US-A-4 295 201  (WIKLUND) <br> * Figures 1,3; abstract * | 1 | |

TECHNICAL FIELDS SEARCHED (Int. Cl.5)

G 01 C

The present search report has been drawn up for all claims

| Place of search | Date of completion of the search | Examiner |
|---|---|---|
| THE HAGUE | 17-09-1991 | KOLBE W.H. |